Europäisches Patentamt

(19) European Patent Office

Office européen des brevets

(11) Publication number: **0 276 322**
**A1**

# (12) EUROPEAN PATENT APPLICATION

published in accordance with Art. 158(3) EPC

(21) Application number: 87904724.9

(51) Int. Cl.³: **H 01 S 3/097**

(22) Date of filing: 15.07.87

Data of the international application taken as a basis:

(86) International application number:
PCT/JP87/00509

(87) International publication number:
WO88/00765 (28.01.88 88/03)

(30) Priority: 18.07.86 JP 169542/86

(43) Date of publication of application:
03.08.88 Bulletin 88/31

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KARUBE, Norio
1-9-28, Minamitsukushino
Machida-shi Tokyo 194(JP)

(74) Representative: Brunner, Michael John et al,
GILL JENNINGS & EVERY 53-64 Chancery Lane
London WC2A 1HN(GB)

(54) GAS LASER.

(57) A gas laser wherein a laser medium gas is circulated inside an air-tight vessel and a laser beam is generated from the gas excited by discharge. A main device portion (10) comprising a gas circulating blower (13), a heat exchanger (12a, 12b) for cooling and a discharge power source (11) is separated from a laser beam emitting portion (20) comprising a discharge portion (23) and a resonator reflection mirror (21b, 21a). The operating pressure of the laser medium gas is adjusted to at least 1/2 atm and the main device portion (10) and the laser beam emitting portion (20) are connected to each other with a gas piping portion (30) having a high flexibility.

EP 0 276 322 A1

DESCRIPTION

GAS LASER DEVICE

Technical Field

The present invention relates to a gas laser device for use in machining, and more particularly to a gas laser device having a main unit including a power supply, etc., and a laser beam emitter separate from the main unit. the main unit and the laser beam emitter being coupled by a flexible gas pipe assembly.

Background Art

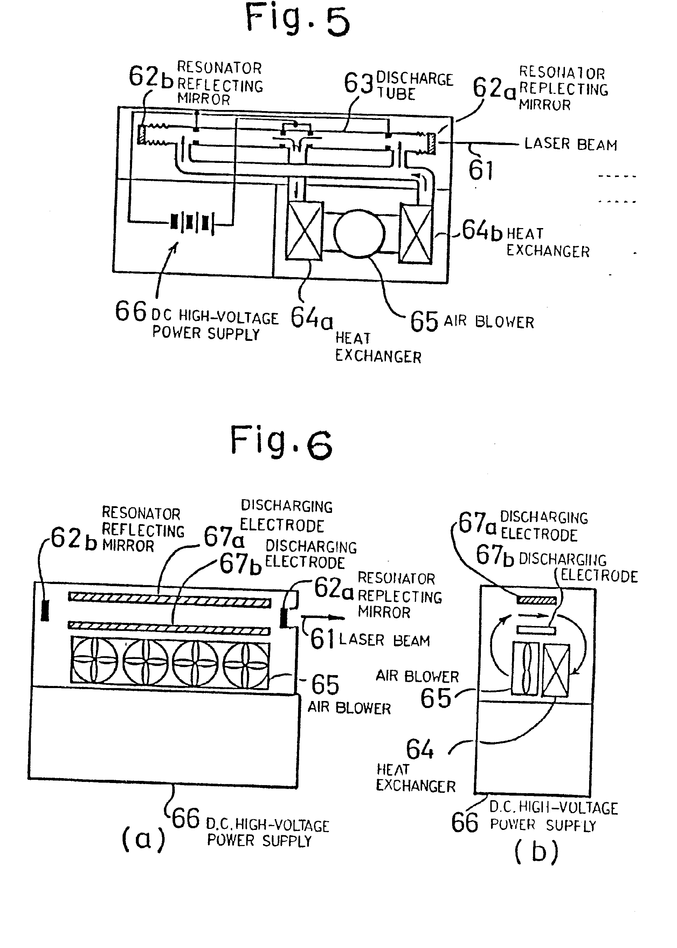

Gas laser devices are widely used for cutting metal. Two typical gas layser devices are shown in FIGS. 5 and 6.

FIG. 5 shows a high-speed axial-flow-type gas laser device. Designated at 61 is a laser beam, 62a, 62b resonator reflecting mirrors, 63 a discharge tube, 64a, 64b heat exchangers for absorbing heat of the discharge gas and discharging the same to cool the gas, 65 an air blower for circulating a laser medium gas, and 66 a DC high-voltage power supply for generating electric discharges in the discharge tube.

In this type of gas laser device, electric discharges are produced in the discharge tube 63 to excite the laser medium gas which flows at a high speed in the tube for thereby causing laser excitation. The arrows in FIG. 5 indicate the direction in which the laser medium gas flows.

FIG. 6 shows an orthogonal-type gas laser device. Those parts which are identical to those shown in FIG. 5 are denoted by identical reference numerals, and will not be described in detail. Denoted at 67a, 67b are discharge electrodes disposed in confronting relation to each other.

In this type of gas laser device, electric discharges are generated between the electrodes 67a, 67b to excite a laser medium gas flowing at a high speed between the electrodes for laser excitation.

In order to operate a gas laser device efficiently on a continued basis, the temperature of the gas in a discharging unit must be kept low. Both of the above gas laser device types are equipped with a heat exchanger and an air blower, and a discharging power supply of a substantial size, and hence have a substantial weight and volume as a whole.

Systems for machining workpices using the above laser devices include a system in which the workpiece is moved and a system in which a laser beam is scanned. In the system in which the workpiece is moved, a machining table is large in size, the machining speed is low, and three-dimensional machining is especially difficult to achieve. Therefore, the system in which the laser beam is scanned and a system in which the workpiece is moved and the laser beam is scanned are mainly relied upon at present.

When the laser beam is scanned, however, the optical distance between the laser device and the workpiece is varied, resulting in lowered machining performance.

Disclosure of the Invention

· It is an object of the present invention to provide a gas laser device which will solve the above problem and has a main unit including a power supply, etc., and a laser beam emitter separate from the main unit, the main unit and the laser beam emitter being connected by a flexibl gas pipe assembly.

To solve the above problems, there is provided in accordance with the present invention a gas laser device in which a laser medium gas is circulated in an airtight container and a laser beam is generated from the gas excited by an electric discharge, comprising:

a main unit including an air blower for circulating the gas, a heat exchanger for cooling the gas, and a discharging power supply;

a laser beam emitter including a discharging unit and resonator reflecting mirrors and being separate from the main unit;

the laser medium gas being kept under a pressure which is 1/2 of atmospheric pressure or higher during operation; and

a flexible gas pipe assembly of a high degree of freedom coupling said main unit and said laser beam emitter.

Since the laser beam emitter is separate from the main unit and the pressure of the laser beam emitter is kept at 1/2 of atmospheric pressure or higher during operation, the flexible gas pipe assembly can be employed which is subject to a small differential pressure between the interior and exterior spaces thereof. The laser beam emitter may be installed in the vicinity of a laser machining head. The laser machining head has a high degree of freedom. The laser beam is not required to traverse a long distance using mirrors providing a folded laser beam passage, and stable machining is made possible.

Brief Description of the Drawings

FIG. 1 is a perspective view of an embodiment of the present invention;

FIG. 2 is a schematic cross-sectional view of the embodiment of the present invention;

FIG. 3 is a perspective view of another embodiment of a laser beam emitter;

FIG. 4 is a perspective view of an embodiment in which a laser beam emitter is mounted on a robot;

FIG. 5 is a cross-sectional view of a conventional high-speed axial-flow type gas laser device;

FIG. 6(a) is a sectional front elevational view of a conventional orthogonal-type gas laser device; and

FIG. 6(b) is a sectional side elevational view of the conventional orthogonal-type gas laser device.

Best Mode for Carrying Out the Invention

Embodiments of the present invention will hereinafter be described in specific detail with reference to the drawings.

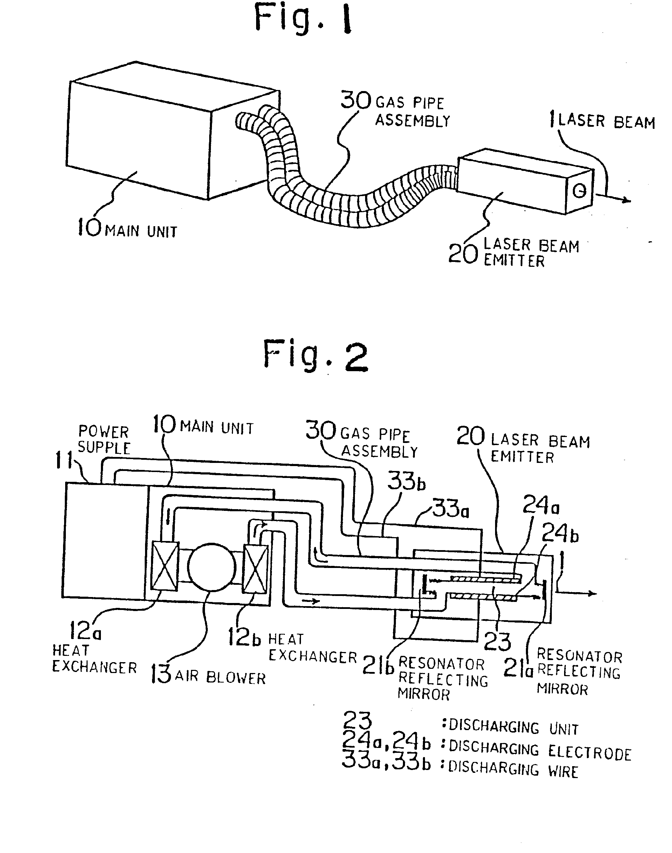

FIG. 1 is a perspective view of an embodiment of the present invention; and FIG. 2 is a schematic cross-sectional view of the embodiment.

Designated in FIG. 1 at 1 is a laser beam, 10 a main unit including a power supply, heat exchangers, and an air blower, 20 a laser beam emitter having a resonant unit including discharging electrodes and resonator reflecting mirrors, and 30 a gas pipe assembly for supplying a laser medium gas from the main unit 10 to the laser beam emitter 20 and returning a high-temperature laser medium gas back to the main unit 10. The gas pipe assembly 30 may comprise flexible metal bellows or pipes of nonmetallic material. The laser medium gas is kept at a pressure which is 1/2 of atmospheric pressure or higher during operation. Therefore, a material which is subject to a small differential pressure between the interior and exterior spaces of the gas pipe assembly, and which does not have a specially high mechanical strength may be employed for the gas pipe assembly. With such a material, the gas pipe assembly is more flexible and expandable and contractable.

FIG. 2 is a schematic cross-sectional view of FIG. 1. Denoted in FIG. 2 at 1 is the laser beam and 10 the main unit which has a power supply 11, an air blower 13, and heat exchangers 12a, 12b. The arrow in FIG. 2 indicates the flow of the laser medium gas.

The laser beam emitter 20 has resonator reflecting mirrors 21a, 21b for reflecting and resonating the laser beam, discharging electrodes 24a, 24b for generating an electric discharge, and a discharging unit 23 for exciting the laser medium beam. The discharging electrodes 24a, 24b are connected to the power supply 11 by discharging wires 33a, 33b. Since the gas pipe assembly 30 is constructed of flexible members, the laser beam emitter 20 can be moved three-dimensionally, and the distance which the laser beam emitter 20 is moved can be adjusted to a desired distance by selecting the length of the gas pipe assembly 30.

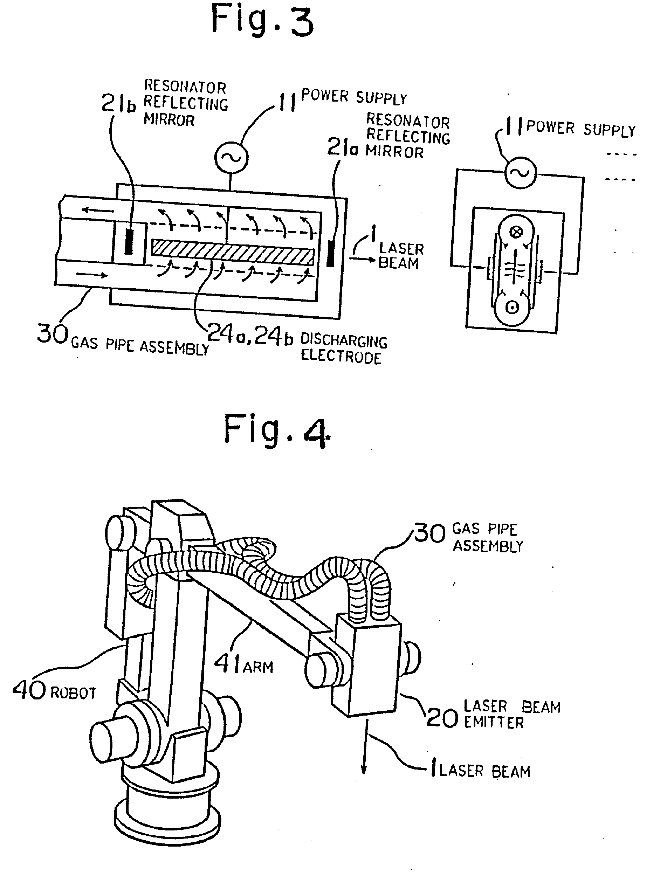

FIG. 3 illustrates another embodiment of a laser beam emitter 20. The illustrated embodiment employs a lateral excitation type structure. Those parts which are identical to those of FIG. 2 are denoted by identical reference numerals. A power supply 11 is contained in a main unit 10 (not shown), and shown for reference only. In the lateral excitation type structure, a dicharging direction, a laser beam direction, and a laser medium gas flowing direction are perpendicular to each other, making it possible to reduce the size of the laser beam emitter 20, which may advantageously be mounted on the distal end of a robot arm.

FIG. 4 shows an embodiment in which the laser beam emitter 20 of the above embodiment is mounted on the distal end of a robot. A gas pipe assembly 30 is attached along an arm 41 of the robot. Movement of the robot 40 causes the laser beam emitter 20 to move three-dimensionally for machining a three-dimensional workpiece with a laser beam. While the gas pipe assembly 20 is disposed along the arm 41, it may be incorporated in the arm 41.

With the present invention, as described above, since a laser beam emitter is separate from a main unit, a laser medium gas is kept 1/2 of atmospheric pressure or higher during operation, and a flexible gas pipe assembly is employed. Therefore, the laser beam emitter is installed near a laser machining head, the machining head has a high degree of freedom, and the laser beam is not required to traverse a long distance using mirrors providing a folded laser beam passage. Consequently, stable machining is made possible, and a three-dimensional workpiece can be machined.

CLAIMS

1. A gas laser device in which a laser medium gas is circulated in an airtight container and a laser beam is generated from the gas excited by an electric discharge, comprising:

a main unit including an air blower for circulating the gas, a heat exchanger for cooling the gas, and a discharging power supply;

a laser beam emitter including a discharging unit and resonator reflecting mirrors and being separate from the main unit;

the laser medium gas being kept under a pressure which is 1/2 of atmospheric pressure or higher during operation; and

a flexible gas pipe assembly of a high degree of freedom coupling said main unit and said laser beam emitter.

2. A gas laser device according to claim 1, wherein said discharging power supply of said main unit is of the pulse discharging type or the high-frequency discharging type.

3. A gas laser device according to claim 1, wherein said laser beam emitter is mounted on a distal end of a robot.

4. A gas laser device according to claim 3, wherein said gas pipe assembly is disposed along an arm of the robot.

5. A gas laser device according to claim 3, wherein said gas pipe assembly is disposed in an arm of the robot.

Fig. 1

30 GAS PIPE ASSEMBLY

1 LASER BEAM

10 MAIN UNIT

20 LASER BEAM EMITTER

0276322

1/3

Fig. 2

POWER SUPPLE

10 MAIN UNIT

30 GAS PIPE ASSEMBLY

20 LASER BEAM EMITTER

11

33b

33a

24a

24b

12a HEAT EXCHANGER

13 AIR BLOWER

12b HEAT EXCHANGER

21b RESONATOR REFLECTING MIRROR

23

21a RESONATOR REFLECTING MIRROR

23 : DISCHARGING UNIT
24a, 24b : DISCHARGING ELECTRODE
33a, 33b : DISCHARGING WIRE

2/3

0276322

Fig.3

Fig.4

# Fig. 5

$62b$ RESONATOR REFLECTING MIRROR

$63$ DISCHARGE TUBE

$62a$ RESONATOR REFLECTING MIRROR

LASER BEAM

$61$

$64b$ HEAT EXCHANGER

$66$ DC HIGH-VOLTAGE POWER SUPPLY

$64a$ HEAT EXCHANGER

$65$ AIR BLOWER

# Fig. 6

$62b$ RESONATOR REFLECTING MIRROR

$67a$ DISCHARGING ELECTRODE

$67b$ DISCHARGING ELECTRODE

$62a$ RESONATOR REFLECTING MIRROR

$61$ LASER BEAM

$65$ AIR BLOWER

$66$ D.C. HIGH-VOLTAGE POWER SUPPLY

(a)

$67a$ DISCHARGING ELECTRODE

$67b$ DISCHARGING ELECTRODE

AIR BLOWER

$65$

$64$ HEAT EXCHANGER

$66$ D.C. HIGH-VOLTAGE POWER SUPPLY

(b)

0276322

# INTERNATIONAL SEARCH REPORT

International Application No · PCT/JP87/00509

| I. CLASSIFICATION OF SUBJECT MATTER (if several classification symbols apply, indicate all) · |
|---|
| According to International Patent Classification (IPC) or to both National Classification and IPC |

Int.Cl.$^4$  H01S3/097

## II. FIELDS SEARCHED

Minimum Documentation Searched [4]

| Classification System · | Classification Symbols · |
|---|---|
| IPC | H01S3/097, B23K26/08 |

Documentation Searched other than Minimum Documentation
to the Extent that such Documents are Included in the Fields Searched [6]

| | |
|---|---|
| Jitsuyo Shinan Koho | 1926 - 1986 |
| Kokai Jitsuyo Shinan Koho | 1971 - 1986 |

## III. DOCUMENTS CONSIDERED TO BE RELEVANT [14]

| Category * | Citation of Document, [16] with indication, where appropriate, of the relevant passages [17] | Relevant to Claim No. [18] |
|---|---|---|
| A | JP, A, 57-148959 (Toshiba Corp.) 14 September 1982 (14. 09. 82) Fig. 1, 1, 1A (Family: none) | 1 |
| A | JP, A, 58-83973 (Toshiba Corp.) 19 May 1983 (19. 05. 83) Fig. 1, 1, 1a & JP, B2, 60-30835 | 1 |
| A | JP, A, 60-57986 (Hitachi, Ltd.) 3 April 1985 (03. 04. 85) Fig. 1, Mark 20 (Family: none) | 1 |
| Y | JP, A, 58-111384 (Matsushita Electric Ind. Co., Ltd.) 2 July 1983 (02. 07. 83) Page 2, upper left column, lines 2 to 3 (Family: none) | 1 |
| Y | JP, A, 60-234787 (Cincinnati Milacron Inc.) 21 November 1985 (21. 11. 85) Fig. 9 & EP, A, 160293 | 3, 4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance. the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [1] | Date of Mailing of this International Search Report [2] |
|---|---|
| October 5, 1987 (05. 10. 87) | October 19, 1987 (19. 10. 87) |

| International Searching Authority [1] | Signature of Authorized Officer [19] |
|---|---|
| Japanese Patent Office | |

Form PCT ISA 210 (second sheet) October 1977)

| FURTHER INFORMATION CONTINUED FROM THE SECOND SHEET | | |
|---|---|---|
| Y. | JP, A, 61-7086 (Cincinnati Milacron Inc.) 13 January 1986 (13. 01. 86) Marks 10, 14, 15 (Family: none) | 3, 4 |
| Y. | JP, B1, 48-11513 (Matsushita Electric Ind. Co., Ltd.) 13 April 1973 (13. 04. 73) Fig. 8 (Family: none) | 5 |
| Y | JP, A, 57-208185 (Mitsubishi Electric Corporation) 21 December 1982 (21. 12. 82) (Family: none) | 2 |

**V.☐ OBSERVATIONS WHERE CERTAIN CLAIMS WERE FOUND UNSEARCHABLE**[18]

This international search report has not been established in respect of certain claims under Article 17(2) (a) for the following reasons:

1.☐ Claim numbers_____ because they relate to subject matter[12] not required to be searched by this Authority, namely:

2.☐ Claim numbers_____ because they relate to parts of the international application that do not comply with the prescribed requirements to such an extent that no meaningful international search can be carried out[13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)

0276322

FURTHER INFORMATION CONTINUED FROM THE SECOND SHEET

| | | |
|---|---|---|
| Y | JP, A, 60-178681 (Mitsubishi Electric Corporation) 12 September 1985 (12. 09. 85) Fig. 2(b) & EP, A, 152084 & JP, A, 60-169178 | 2 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1 ☐ Claim numbers_____, because they relate to subject matter [12] not required to be searched by this Authority, namely:

2.☐ Claim numbers_____, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee

Remark on Protest

☐ The additional search fees were accompanied by applicant's protest.

☐ No protest accompanied the payment of additional search fees

Form PCT ISA/210 (supplemental sheet (2)) (October 1981)